# FASCICULE DE BREVET EUROPEEN

(11) **EP 2 153 383 B1**
(45) Date de publication et mention de la délivrance du brevet: **08.07.2020**
(21) Numéro de dépôt: 08759748.0
(22) Date de dépôt: 19.05.2008
(51) Int. Cl.: G06K 19/02, G06K 19/077

(54) **PROCÉDÉ DE RÉALISATION D'UN DISPOSITIF COMPORTANT UNE ANTENNE DE TRANSPONDEUR RADIOFRÉQUENCE AVEC DEUX PORTIONS TERMINALES RÉALISÉES SUR UN SUPPORT ET DISPOSITIF OBTENU**
VERFAHREN ZUR HERSTELLUNG EINER VORRICHTUNG, DIE EINE RADIOFREQUENZ-TRANSPONDERANTENNE MIT ZWEI AUF EINEM TRÄGER IMPLEMENTIERTEN ENDABSCHNITTEN UMFASST, UND SO ERHALTENE VORRICHTUNG
METHOD OF MANUFACTURING A DEVICE COMPRISING A RADIOFREQUENCY TRANSPONDER ANTENNA WITH TWO TERMINAL PORTIONS MADE ON A SINGLE MEDIUM AND DEVICE OBTAINED

(30) Priorité: 21.05.2007 EP 07301056
(43) Date de publication de la demande: 17.02.2010
(73) Titulaire: Gemalto SA, 92190 Meudon (FR)
(72) Inventeur: MARTINENT, Jean-François, F-13090 Aix en Provence (FR); ROBLES, Laurence, F-83640 Saint Zacharie (FR); ROUSSEL, François, F-92330 Sceaux (FR)
(74) Mandataire: Milharo, Emilien
(86) Numéro de dépôt international: PCT/EP2008/056123
(87) Numéro de publication internationale: WO 2008/142052

(56) Documents cités:
- EP-A- 0 689 164
- WO-A-02/27651
- WO-A-03/047028
- DE-A1-102006 051 379
- FR-A- 2 863 747

## Description

L'invention concerne un procédé de réalisation d'un dispositif comportant une antenne de transpondeur radiofréquence, ledit procédé comprenant une étape de réalisation de l'antenne avec deux portions terminales sur un support par technique filaire.

En particulier, l'invention vise la réalisation de carte à puce sans contact et /ou de document de voyage tel que passeport électronique, de visa électronique, étiquette électronique, un insert ou "inlay", tout produit électronique de communication radiofréquence destiné à comporter une connexion d'un module à une antenne.

Parmi les procédés de réalisation de transpondeur, on connaît l'usage d'antenne filaire disposée dans un corps de carte en matière plastique par une technologie d'incrustation de fil par ultra sons. Le module est ensuite connecté par soudure thermo-compression avec le même fil d'antenne à des plages ou plots de connexion d'un composant électronique.

Pour la soudure, le fil conducteur est mis en contact avec les plages de contact d'un module ou plots de connexion d'une puce électronique et une sonde de thermo-compression est appliquée sur le fil, contre la plage ou le plot.

On connaît aussi le recours à des techniques de réalisation d'antenne filaire venant du domaine textile tel que la couture, broderie... qui utilise un support textile ou fibreux.

Cette dernière technique expérimentée par les inventeurs, a révélé la nécessité de mettre en œuvre des débuts et/ou des fins de broderie ou de couture qui doivent être stoppés notamment par plusieurs passages des fils ou aiguilles au même endroit. Ces points sont effectués de manière à permettre notamment à tirer sur les fils avant et/ou pour leur coupe et de les stabiliser sur le support.

Ces points d'arrêt créent soit une surépaisseur de 200 à 600 µm le fil conducteur étant de l'ordre de 100µm, et/ou un bout de fil résiduel « en l'air » dommageables pour les étapes ultérieures notamment de lamination ou pour la caractéristique radiofréquence de l'antenne; Cela peut aussi gêner l'esthétique du support et la connexion d'un module.

Selon un mode de réalisation de l'invention, pour des facilités de mise en œuvre du fil d'antenne brodée, ce dernier est une association ou combinaison d'un ou plusieurs fils conducteurs avec un ou plusieurs autres fils en fibres synthétiques (PA : polyamide, coton, PES : polyester). Lors de la connexion des fils au module par thermo-compression en appuyant sur le fil avec la sonde, notamment réalisée de manière classique, Les inventeurs ont constaté un endommagement de l'outil de soudure, ce dernier étant pollué par les fibres non conductrices.

L'invention a pour objectif de résoudre les problèmes susvisés rencontrés dans le développement d'une nouvelle technologie d'antenne de transpondeur industrialisable bas coût, en particulier le problème de surépaisseur de fil et de pollution de l'outil de soudure.

Le premier problème est résolu dans la réalisation de points d'arrêt en début et/ou fin de parcours d'antenne; puis en cas de besoin dans l'élimination de la surépaisseur et/ou bout de fil résiduel flottant en l'air.

Le second problème est résolu en proposant une autre construction du dispositif et report module qui permette une soudure dans le sens sonde de soudure / plages de connexion du module / fil conducteur.

A cet effet, l'invention a pour objet un procédé de réalisation d'un dispositif comportant une antenne de transpondeur radiofréquence, selon la revendication 1;

Le procédé se distingue en ce qu'il comprend une étape de réalisation d'un point d'arrêt de fil d'antenne en bout de l'une au moins des dites portions terminales.

Grâce à cette étape, le fil d'antenne est stabilisé, et le tirage et coupe du fil peuvent s'effectuer correctement à cadence élevée.

Selon d'autres caractéristiques du procédé :
- ledit procédé comprend une étape d'élimination dudit point d'arrêt, supprimant ainsi les problèmes de surépaisseur et de fil en l'air;
- l'étape d'élimination comprend une élimination de matière du support en regard du point d'arrêt et formation d'une cavité, permettant ainsi l'insertion d'un module dans la cavité et une réduction de l'épaisseur de l'ensemble;
- les portions terminales de l'antenne ou points d'arrêt sont superposés ou réalisées dans une zone du support destinée à être éliminée, permettant ainsi une préparation nette des extrémités terminales d'antenne à connecter en plus d'un logement partiel de module;
- le point d'arrêt est choisi parmi un point d'arrêt de couture, de broderie, tricotage, qui sont des techniques filaires permettant des cadences élevées;
- on reporte des plages conductrices en regard des dites portions terminales et on connecte lesdites plages de contact aux portions de fil terminales par soudure par transfert d'énergie à travers lesdites plages de contact; cette disposition évite ainsi de souiller l'outil de soudure;
- un composant électronique est fixé aux plages de contact, les plages étant préalablement connectées à l'antenne ou préalablement au composant comme un module;
- le composant est disposé au moins en partie dans ladite cavité;
- le support comprend un tissu et une étape de fixation d'un matériau stabilisant, renforçant le tissu.

L'invention a également pour objet un dispositif selon la revendication 10;

Le dispositif se distingue en ce que l'une au moins des dites portions s'étend jusqu'au bord d'une cavité, permettant ainsi une préparation nette des extrémités d'antenne pour une bonne connexion et positionnement précis d'un module ou puce avec ses plages de contact dans la cavité.

Ainsi, les plages de contact n'ont pas besoin de s'étendre beaucoup sur le substrat, l'extrémité d'antenne étant localisée précisément jusqu'au bord.

Cet avantage de positionnement précis de composant à connecter relativement aux extrémités d'antenne est applicable quelle que soit la technique de réalisation d'antenne mise en œuvre: filaire, broderie, gravure, sérigraphie, etc. Le composant étant positionné dans la cavité, les extrémités d'antenne se trouvent nécessairement sur le bord puisque une opération d'élimination au moins d'une partie d'antenne et/ou du support au niveau d'une zone de report de puce ou de module, définit de nouvelles extrémités au bord de la zone d'élimination.

On peut aussi adapter les dimensions du composant à une zone de report et/ou de réception (cavité) aussi proche que possible des portions terminales de l'antenne qui sont définies après réalisation de l'antenne.

De la sorte, l'invention a conduit également à un procédé de positionnement précis et adaptation aux dimensions d'un composant à connecter par rapport à des portions terminales d'antennes et au produit obtenu.

L'invention a également pour objet un produit électronique de communication radiofréquence, tel une carte à puce sans contact, un passeport, un insert comprenant le dispositif ci-dessus.

D'autres particularités et avantages de l'invention apparaîtront à la lecture de la description, qui suit, donnée à titre d'exemple illustratif et non limitatif, et faite en référence aux figures annexées pour lesquelles :
- la figure 1 illustre une vue schématique d'un dispositif à antenne de transpondeur selon un mode de mise en œuvre du procédé de l'invention ;
- la figure 2 et 2C illustrent deux vues schématiques correspondantes d'un dispositif à antenne de transpondeur selon un second mode de mise en œuvre du procédé de l'invention ;
- les figures 3 et 3C illustrent une étape du procédé comprenant l'élimination du point d'arrêt des figures précédentes et formation de cavité à la place;
- les figures 4 et 4C illustrent une étape du procédé selon le second mode comprenant le report et connexion d'un module dans le dispositif de la figure précédente ;
- les figures 5, 6, 7, 8 illustrent un troisième mode de mise en œuvre de l'invention à l'échelle industrielle;
- la figure 9 illustre un autre mode de report et connexion d'un module de l'invention.

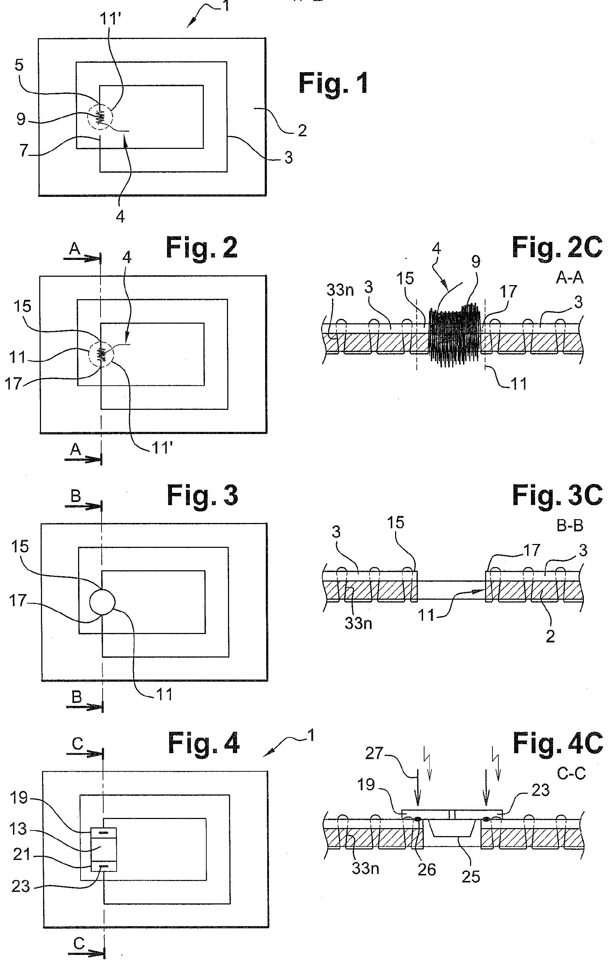

Comme le montre la figure 1, un dispositif 1 conforme à un mode de réalisation de l'invention comporte une antenne de transpondeur radiofréquence 3, réalisée avec deux portions terminales 5, 7 sur un support 2 par une technique filaire. Les spires d'antenne comprennent ou constitue un fil conducteur dont les caractéristiques sont adaptées à une communication radiofréquence. Ce dispositif est amené à être un produit électronique de communication radiofréquence, tel une carte à puce sans contact, un passeport, ou sous produit tel un insert (dit inlay sans contact).

Dans l'exemple, le dispositif 1 constitue un insert ou "inlay", et le fil, fixé par une technique de broderie, comporte de préférence une gaine isolante lui permettant d'effectuer des croisements sur d'autres spires sans court-circuit.

Une portion terminale 7 de début de circuit d'antenne a démarré sans point d'arrêt mais se termine avec point d'arrêt 9 et le cas échéant un bout de fil en l'air 4. Ce point est en cas de besoin destiné à être enlevé notamment par poinçonnage.

Dans une variante non décrite un module peut être connecté d'une part à la portion 7 d'autre part au point d'arrêt 9 ou en amont du point d'arrêt.

A la figure 2, 2C un autre mode de réalisation, le point de départ 15 et point de fin 17 de l'antenne parviennent dans une même zone 11 destinée à être enlevée.

Lorsque le point est enlevé notamment par poinçonnage, figure 3, 3C, le dispositif comporte selon une caractéristique, au moins une portion terminale 5 qui s'étend jusqu'au bord de la cavité 11 pour le mode de la figure 1 et deux portions 15, 17 pour celui de la figure 2.

A la figure 4, 4C le dispositif à antenne 1 est plus avancé et comprend un composant électronique 13 connecté aux plages de contact.

Des plages conductrices 19, 21 sont connectées par soudure 26 aux portions terminales de fil par transfert d'énergie à travers lesdites plages de contact, qui comportent une marque 23 résultant de la pression et activation d'un l'outil de soudure 27.

Selon un mode préféré, le composant électronique est disposé au moins en partie dans la cavité 11. Ici au moins une puce électronique et son enrobage 25 sont disposés dans la cavité.

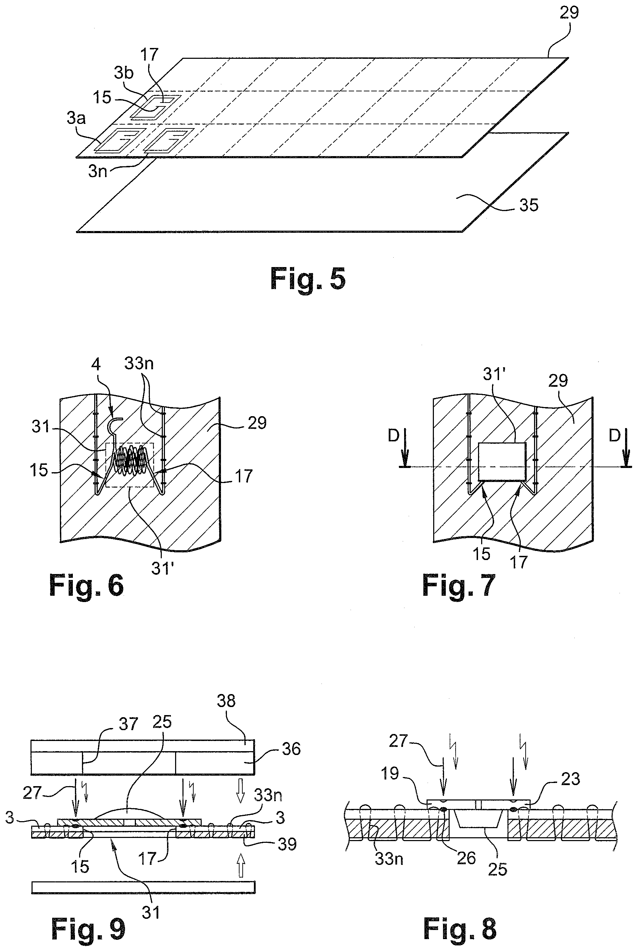

Toutefois, le composant pourrait être disposé hors de la cavité, par exemple en mettant l'enrobage du module orienté à l'opposé du substrat (fig.9).

Le composant peut être un module électronique 3 disposés sur un substrat 4.

Le composant dans l'exemple est un module électronique du type sans contact comportant un film support, type circuit imprimé, doté d'une puce de circuit intégré fixée sur le film support et connecté par fil soudé ou selon une technique type flip-chip (puce retournée et connectée avec une colle conductrice), aux plages de contact s'étendant de part et d'autre du film support.

Le module peut être réalisé sans film support diélectrique.

Un enrobage 25 avec une résine de protection peut venir couvrir la puce et ses contacts.

On décrit maintenant un mode préféré de mise en œuvre du procédé de réalisation de dispositif à antenne de transpondeur radiofréquence.

A la figure 5, le procédé comprend la fourniture d'un substrat 29 comportant des fibres tel un tissu ou un non tissé très fin de l'ordre de .80 à 300 µm d'épaisseur (par exemple un tissu comportant des fils chaîne et trame de 48 dtex avec un maillage de l'ordre de 200 µm) et qui possède des dimensions permettant de réaliser une pluralité d'antenne 3a-3n en même temps.

Cependant, ne sont pas exclus d'autres substrats isolants qui peuvent être par exemple un film ou feuille en matériau polymère, en PVC, PET (polyéthylène), papier, polyimide, cuir synthétique, matériau apte à être cousu ou brodé.

Le substrat peut avoir différentes épaisseurs, généralement inférieures ou égales à celle d'une carte à puce de 0,76 mm de manière le cas échéant à servir d'insert entre deux films ou feuilles ou servir de support à une feuille de couverture et/ou d'impression. Typiquement le substrat peut avoir une épaisseur allant par exemple de 0,1 mm à 0,5 mm.

Le procédé comprend une étape de formation de l'antenne ou pluralité d'antennes sur le substrat, ladite antenne comportant deux portions terminales de connexion 15, 17, par une technique filaire,

Selon une caractéristique du mode de mise en œuvre, on réalise des points d'arrêt de fil d'antenne en bout de l'une au moins des dites portions terminales.

Dans l'exemple (figure 6), les portions terminales 15, 17 de l'antenne ou points d'arrêt sont superposés ou réalisées dans une zone 31 du support destinée à être éliminée.

Le point d'arrêt est choisi parmi un point d'arrêt de couture, de broderie, tricotage en fonction de la technique utilisée pour réaliser l'antenne. En l'occurrence, on utilise la broderie. Un fil de fixation 33 lie le fil d'antenne au support à différents endroits 33a - 33n. Le point peut comporter plusieurs passages et/ou superposition au même endroit de fils d'antenne et fil de fixation.

Le maniement du tissu support d'une antenne brodée étant très délicat (matériau tissé souple et poreux). On procède à la fixation d'un matériau stabilisant, renforçant le tissu. Le support est de préférence associé à une feuille 35 lui conférant plus de tenue et de stabilité dimensionnelle et facilite le maniement de l'ensemble substrat, antennes.

De préférence, l'adjonction de la feuille de renfort est effectuée après la réalisation de l'antenne mais pourrait être réalisée avant. Si réalisé au préalable, il pourrait y avoir des difficultés pour coudre ou broder et une baisse de productivité ou performance.

Un effet semblable à l'ajout d'une feuille peut être obtenu par imprégnation ou enduction d'une couche ou pulvérisation d'un produit tel un enduit, un apprêt, une résine, une mousse polymère, une gomme, apte à stabiliser dimensionnellement le substrat.

L'assemblage peut être réalisé par soudure thermique (fusion des matériaux) ou addition d'un adhésif (en film, liquide).

Cette étape permet également de conférer une épaisseur de compensation au substrat permettant de recevoir une partie d'un composant dans le support lors du report de ce dernier.

A l'étape suivante, selon une caractéristique, on procède à l'élimination dudit point d'arrêt (figure 7).

Cette élimination est réalisée de préférence par poinçonnage du support au niveau du point et/ou bout de fil en l'air 4, et comprend de ce fait une élimination de la matière du support en regard du point d'arrêt et formation d'une cavité 31 mais elle peut être réalisée par tout autre moyen connu d'usinage, perçage d'un trou, ablation laser du point avec ou sans enlèvement de matière du support.

A l'étape suivante (figure 7), selon une caractéristique, on reporte des plages conductrices en regard des dites portions terminales et on connecte lesdites plages de contact aux portions de fil terminales par soudure par transfert d'énergie à travers lesdites plages de contact.

Dans l'exemple, le composant électronique est au préalable fixé aux plages de contact 19, 21 qui font partie d'un module électronique. Toutefois, il est possible dans de reporter uniquement des métallisations ou plages de contact, pastilles, sur le substrat de manière à pouvoir les connecter aux portions terminales de l'antenne, et ensuite venir reporter un composant tel une puce électronique que l'on connecte ensuite à ces plages.

Lors du report de composant, ce dernier est de préférence disposé au moins en partie dans ladite cavité formée; en particulier, la puce enrobée 25 est logée dans la cavité 31 tandis que les plages viennent en surface du substrat en regard des portions terminales de connexion de l'antenne.

A l'étape suivante, on réalise de préférence la connexion de ces parties terminales de l'antenne aux plages de contact. Cette connexion s'effectue de préférence par une sonde 27, de type thermo compression appliquée sur la plage de contact, laquelle est pressée contre la portion de fil terminale.

On peut éventuellement utiliser d'autres moyens de soudage comme une sonde à ultra-sons, ou arc électrique voire matière conductrice adhésive si les fils d'antenne sont dénudés à l'endroit de connexion.

Le fil conducteur d'une antenne brodée étant une combinaison du matériau conducteur et d'un ou plusieurs autres fibres synthétiques (PA, coton, PES), la connexion module avec le fil d'antenne brodée doit se faire dans le sens sonde de thermo compression / plages de connexion du module / fil brodé afin d'obtenir une connexion sans endommager l'outil de soudure.

La soudure utilise de préférence une enclume (non représentée) qui vient exercer un appui contre l'enfoncement de la portion terminale de l'antenne dans le support; l'enclume transperce au moins la feuille ou couche de renfort en regard de la portion terminale à connecter de manière que la portion à connecter soit supportée par l'enclume pendant la soudure; L'enclume ou aiguille peut avoir une section rectangulaire ou carrée par exemple comprise entre 0,3 x 1 mm² à 1 x 5 mm².

Dans le cas où, une puce est reportée et connectée aux plages par exemple par "flip-chip" (connexion puce retournée), il peut y avoir une étape de dépôt d'enrobage subséquent.

A la figure 9, une variante de mise en œuvre consiste à reporter un module sans le disposer dans la cavité d'extraction du point d'arrêt, mais au dessus ou à distance de la cavité, le substrat étant trop fin à ce stade pour le loger dans la cavité formée.

Au moins un film de compensation 36, 38 avec cavité de logement 37 de tout ou partie du module est ajouté par dessus le module. De même au moins une feuille de couverture peut venir compléter le dispositif à antenne.

A la fin du procédé de connexion, l'ensemble est découpé au format voulu le long des pointillés avant ou après avoir reçu des éventuellement les feuilles de couverture ou de compensation, ou de renfort.

Le cas échéant, les feuilles 35, 36, 38, peuvent comprendre un matériau apte à absorber les chocs ou une certaine déformation lors des laminations ou lors d'utilisation et peuvent ne pas comprendre de cavité dans ce cas.

## Revendications

1. Procédé de réalisation d'un dispositif comportant une antenne de transpondeur radiofréquence, ledit procédé comprenant une étape de réalisation de l'antenne avec un parcours d'antenne et deux portions terminales (15, 17) en début et en fin du parcours sur un support isolant électriquement, l'antenne et ses portions terminales s'étendant sur le support isolant, jusqu'à une zone de report d'un composant électronique,
**caractérisé en ce que** l'une au moins desdites portions terminales (5, 15, 17) est formée à partir du parcours même de l'antenne s'étendant jusqu'au bord d'une cavité (11, 31) du support isolant ou jusque dans une zone du support située en regard de ladite zone de report.

2. Procédé selon la revendication 1, **caractérisé en ce qu'**il comprend une étape de réalisation d'au moins une desdites portions terminales ayant à son extrémité un point de départ (15) ou de fin (4) ou d'arrêt (9) de fil d'antenne, dans une zone du support située en regard de ladite zone de report d'un composant électronique et une étape d'élimination de ladite portion terminale et/ou de matière au niveau de ladite zone de report.

3. Procédé selon la revendication 2, **caractérisé en ce que** l'étape d'élimination comprend une élimination de matière du support (2, 29, 39) en regard du point d'arrêt, de départ ou de fin et formation d'une cavité (11,31).

4. Procédé selon la revendication 2 ou 3, **caractérisé en ce que** les portions terminales de l'antenne ou points d'arrêt, de départ ou de fin sont superposés ou réalisés dans une zone du support (11', 31') destinée à être éliminée.

5. Procédé selon l'une des revendications 2 à 4, **caractérisé en ce que** le point d'arrêt, de départ ou de fin est choisi parmi un point de couture, de broderie, tricotage.

6. Procédé selon l'une des revendications précédentes, **caractérisé en ce que** l'on reporte des plages conductrices (19, 21) en regard des dites portions terminales et on connecte lesdites plages de contact aux portions terminales (15, 17) de fil par soudure par transfert d'énergie à travers lesdites plages de contact.

7. Procédé selon l'une des revendications précédentes, **caractérisé en ce qu'**un composant électronique est fixé aux plages de contact.

8. Procédé selon l'une des revendications précédentes, **caractérisé en ce que** le composant est disposé au moins en partie dans ladite cavité (11,31).

9. Procédé selon l'une des revendications précédentes, **caractérisé en ce que** le support comprend un tissu et une étape de fixation d'un matériau stabilisant, renforçant le tissu.

10. Dispositif comportant une antenne de transpondeur radiofréquence, ladite antenne (3) étant réalisée avec un parcours d'antenne et deux portions terminales (15, 17) en début et en fin du parcours d'antenne sur un support isolant électriquement, l'antenne et ses portions terminales s'étendant sur le support isolant électriquement, jusqu'à une zone de report de composant électronique,
**caractérisé en ce que** l'une au moins desdites portions terminales (5, 15, 17) est formée à partir du parcours même d'antenne s'étendant jusqu'au bord d'une cavité (11, 31) du support isolant ou jusque dans une zone du support située en regard de ladite zone de report.

11. Dispositif selon la revendication 10, **caractérisé en ce qu'**il comprend un composant électronique connecté aux plages de contact.

12. Dispositif selon la revendication précédente, **caractérisé en ce que** le composant électronique est disposé au moins en partie (25) dans ladite cavité (11, 31).

13. Produit électronique de communication radiofréquence, tel une carte à puce sans contact, un passeport, un insert obtenu selon le procédé des revendications 1 à 9 ou comprenant le dispositif selon l'une des revendications 10 à 12.

## Patentansprüche

1. Verfahren zur Herstellung einer Vorrichtung, die eine Radiofrequenz-Transponderantenne umfasst, wobei das Verfahren einen Schritt der Herstellung der Antenne mit einem Antennenpfad und zwei Endabschnitten (15, 17) am Anfang und Ende des Pfades auf einem elektrisch isolierenden Träger umfasst, wobei sich die Antenne und ihre Endabschnitte auf dem isolierenden Träger bis zu einer Übertragzone eines elektronischen Bauelements erstrecken,
**dadurch gekennzeichnet, dass** mindestens einer der Endabschnitte (5, 15, 17) aus dem Verlauf selbst der Antenne gebildet ist, der sich bis zu dem Rand eines Hohlraums (11, 31) des isolierenden Trägers oder bis in eine Zone des Trägers, die sich gegenüber der Übertragzone befindet, erstreckt.

2. Verfahren nach Anspruch 1, **dadurch gekennzeichnet, dass** es einen Schritt der Herstellung mindestens eines der Endabschnitte, der an seinem Ende einen Startpunkt (15) oder Endpunkt (4) oder Stopppunkt (9) aufweist, des Antennendrahts in einer Zone des Trägers, die sich gegenüber der Übertragzone eines elektronischen Bauelements befindet, und einen Schritt des Entfernens des Endabschnitts und/oder von Material in dem Bereich der Übertragzone umfasst.

3. Verfahren nach Anspruch 2, **dadurch gekennzeichnet, dass** der Entfernungsschritt ein Entfernen von Material von dem Träger (2, 29, 39) gegenüber dem Stopp-, Start- oder Endpunkt und das Bilden eines Hohlraums (11, 31) umfasst.

4. Verfahren nach Anspruch 2 oder 3, **dadurch gekennzeichnet, dass** die Endabschnitte der Antenne oder Stopp-, Start- oder Endpunkte übereinandergelagert oder in einer Zone des Trägers (11', 31'), die dazu bestimmt ist, entfernt zu werden, hergestellt werden.

5. Verfahren nach einem der Ansprüche 2 bis 4, **dadurch gekennzeichnet, dass** der Stopp-, Start- oder Endpunkt aus einer Näh-, Stick-, Wirkstelle ausgewählt wird.

6. Verfahren nach einem der vorstehenden Ansprüche, **dadurch gekennzeichnet, dass** leitende Bereiche (19, 21) gegenüber den Endabschnitten übertragen und die Kontaktbereiche mit den Drahtendabschnitten (15, 17) durch Schweißen durch Energieübertragung durch die Kontaktbereiche verbunden werden.

7. Verfahren nach einem der vorstehenden Ansprüche, **dadurch gekennzeichnet, dass** ein elektronisches Bauelement an den Kontaktbereichen befestigt wird.

8. Verfahren nach einem der vorstehenden Ansprüche, **dadurch gekennzeichnet, dass** das Bauelement zumindest teilweise in dem Hohlraum (11, 31) angeordnet wird.

9. Verfahren nach einem der vorstehenden Ansprüche, **dadurch gekennzeichnet, dass** der Träger ein Gewebe und einen Befestigungsschritt eines stabilisierenden Materials, das das Gewebe verstärkt, umfasst.

10. Vorrichtung, die eine Radiofrequenz-Transponderantenne umfasst, wobei die Antenne (3) mit einem Antennenpfad und zwei Endabschnitten (15, 17) am Anfang und Ende des Antennenpfades auf einem elektrisch isolierenden Träger hergestellt ist, wobei sich die Antenne und ihre Endabschnitte auf dem elektrisch isolierenden Träger bis zu einer Übertragzone eines elektronischen Bauelements erstrecken,
**dadurch gekennzeichnet, dass** mindestens einer der Endabschnitte (5, 15, 17) ausgehend von dem Verlauf selbst der Antenne gebildet ist, der sich bis zu dem Rand eines Hohlraums (11, 31) des isolierenden Trägers oder bis in eine Zone des Trägers , die sich gegenüber der Übertragzone befindet, erstreckt.

11. Vorrichtung nach Anspruch 10, **dadurch gekennzeichnet, dass** sie ein elektronisches Bauelement umfasst, das mit den Kontaktbereichen verbunden ist.

12. Vorrichtung nach vorstehendem Anspruch, **dadurch gekennzeichnet, dass** das elektronische Bauelement zumindest teilweise (25) in dem Hohlraum (11, 31) angeordnet ist.

13. Elektronisches Radiofrequenzkommunikationsprodukt wie eine kontaktlose Chipkarte, ein Pass, eine Einlage, das gemäß dem Verfahren der Ansprüche 1 bis 9 erhalten wird oder die Vorrichtung nach einem der Ansprüche 10 bis 12 umfasst.

## Claims

1. Method for manufacturing a device comprising a radiofrequency transponder antenna, said method comprising a step of manufacturing the antenna with an antenna path and two terminal portions (15, 17) at the start and end of the path on an electrically insulating medium, the antenna and its terminal portions extending over the insulating medium, up to a transfer zone of an electronic component,
**characterised in that** at least one of said terminal portions (5, 15, 17) is formed from the very path of the antenna extending to the edge of a recess (11, 31) in the insulating medium or until within a zone of the medium located opposite said transfer zone.

2. Method according to claim 1, **characterised in that** it comprises a step of producing at least one of said terminal portions having at its end a start point (15) or an end point (4) or a stop point (9) for an antenna wire, in a zone of the medium located opposite said transfer zone of an electronic component and a step of removing said terminal portion and/or material at the level of said transfer zone.

3. Method according to claim 2, **characterised in that** the removal step comprises removing material from the medium (2, 29, 39) opposite the stop, start or end point and forming a recess (11, 31).

4. Method according to claim 2 or 3, **characterised in that** the terminal portions of the antenna or stop, start or end points are overlaid or produced in a zone of the medium (11', 31') that will be removed.

5. Method according to one of claims 2 to 4, **characterised in that** the stop, start or end point is chosen from sewing, embroidery, or knitting stitches.

6. Method according to one of the preceding claims, **characterised in that** conductive pads (19, 21) are placed opposite said terminal portions and said contact pads are connected to the terminal portions (15, 17) of the wire by welding by energy transfer through said contact pads.

7. Method according to one of the preceding claims, **characterised in that** an electronic component is fastened to the contact pads.

8. Method according to one of the preceding claims, **characterised in that** the component is arranged at least partly within said recess (11, 31).

9. Method according to one of the preceding claims, **characterised in that** the medium comprises a fabric and a step of fastening a stabilising material, reinforcing the fabric.

10. Device comprising a radiofrequency transponder antenna, said antenna (3) being manufactured with an antenna path and two terminal portions (15, 17) at the start and end of the antenna path on an electrically insulating medium, the antenna and its terminal portions extending over the electrically insulating medium, up to an electronic component transfer zone,
**characterised in that** at least one of said terminal portions (5, 15, 17) is formed from the very path of the antenna extending to the edge of a recess (11, 31) in the insulating medium or until within a zone of the medium located opposite said transfer zone.

11. Device according to claim 10, **characterised in that** it comprises an electronic component connected to the contact pads.

12. Device according to the preceding claim, **characterised in that** the electronic component is arranged at least in part (25) within said recess (11, 31).

13. Electronic radiofrequency communication product, such as a contactless smart card, passport, or insert, obtained according to the method of claims 1 to 9 or comprising the device according to one of claims 10 to 12.
